# EUROPEAN PATENT APPLICATION

(11) **EP 4 089 399 A1**
(43) Date of publication of application: **16.11.2022**
(21) Application number: 21173070.0
(22) Date of filing: 10.05.2021
(51) Int. Cl.: G01N 21/64

(54) **SAMPLE HOLDER WITH MATRIX LAYER**

(71) Applicant: Single Technologies AB, 112 34 Stockholm (SE)
(72) Inventor: SAHLGREN, Bengt, 112 34 STOCKHOLM (SE); STRÖMQVIST, Johan, 112 34 STOCKHOLM (SE)
(74) Representative: AWA Sweden AB

(57) **Abstract**

A sample holder (100) for an apparatus (300) configured to perform an assay at a plurality of sample sites (130) is disclosed, wherein each sample site is configured to receive a sample. The sample holder comprises a rotatable body (110) and a matrix layer (120). The plurality of samples sites is distributed in the matrix layer in both a lateral direction and a thickness direction of the matrix layer, and the rotatable body is configured to be arranged in the apparatus to be rotatable around an axis (A) while the assay is performed at the plurality of sample sites. A corresponding method (200) and apparatus (300) are also disclosed.

## Description

### TECHNICAL FIELD

The present invention generally relates to a technique for performing assays on samples, and in particular to sequencing of DNA.

### BACKGROUND

Biochemical assays are known as investigative procedures for qualitatively assessing or quantitatively measuring the presence, amount or functional activity of an analyte, or sample. One example of such procedure is disclosed in WO2016/030464 and involves a confocal scanner and a rotational sample holder. The sample holder comprises a cylindrical body and the samples are arranged in wells or grooves on the outer surface of the cylinder. The scanner may comprise a confocal microscope configured to illuminate and image the samples as the holder rotates around its length axis. This technique may for example be employed for sequencing DNA, wherein samples of immobilized single strands of DNA may be flushed with a solution (or reagent) of nucleotides equipped with fluorophores followed by an imaging step to measure the fluorescence and determine which nucleotide (if any) was incorporated on the strand. The scanning of the rotating sample holder allows for a relatively high throughput in terms of number of scanned samples per time unit, which enable statistical methods and big data analysis to be employed. The throughput is however known to be limited by practical considerations such as maximum scanning speed and maximum number of samples that can be processed in each assay.

In general, the number of samples that can be processed in one run is limited by how close they can be packed, which in turn is ultimately limited by the optical diffraction limit, and the available surface area on the sample holder. Thus, increasing the number of samples per run seems to require making the sample holder larger. This approach may lead to impractical solutions when it comes to handling and scanning the sample holder.

The quest for even larger amounts of biologically relevant data drives the development of high throughput assay technologies. To enable wider adoption in research and paving the way for these techniques to be practiced by the clinical community, it is highly desirable to increase the number of samples that can be analyzed in an assay and to drive down the cost per assay.

### SUMMARY

It is an object of the present invention to provide improved techniques for performing assays of samples, and to overcome or alleviate at least some of the drawbacks associated with the prior art techniques.

In a first aspect of the inventive concept, there is provided a sample holder for an apparatus configured to perform an assay at a plurality of sample sites, wherein each sample site is configured to receive a respective sample. The sample holder comprises a rotatable body and a matrix layer at least partly covering an outer surface of the rotatable body. The plurality of samples sites may be distributed in the matrix layer in both a lateral direction and a thickness direction of the matrix layer. Further, the rotatable body is configured to be arranged in the apparatus to be rotatable around an axis while the assay is performed at the plurality of sample sites.

In a second aspect, there is provided a method for performing an assay of a plurality of samples. According to the method, the plurality of samples is provided in a matrix layer that least partly covers an outer surface of a rotatable body. The plurality of samples may be distributed in the matrix layer in both a lateral direction and a thickness direction of the matrix layer. Further, at least a part of the assay is performed while the rotatable body is rotated around an axis.

In a third aspect, there is provided an apparatus configured to perform an assay of a plurality of samples as indicated above. The apparatus comprises a sample holder according to the first aspect and a microscope configured to illuminate the plurality of samples sites and to detect photons emitted or scattered from the plurality of sample sites. The sample holder comprises a rotatable body and a matrix layer at least partly covering an outer surface of the rotatable body, wherein the plurality of sample sites may be distributed in the matrix layer in both a lateral direction and a thickness direction of the matrix layer. The sample holder is configured to be arranged in the apparatus and to be rotated by the apparatus while the microscope detects the photons emitted or scattered from the plurality of sample sites.

The present inventive concept is based on the insight that by providing a matrix layer having a plurality of sample sites distributed not only in the lateral direction of the layer, but also in a thickness direction of the layer, the holder is capable of accommodating a larger number of samples. Put differently, the matrix layer allows for the samples to be distributed in a three-dimensional volume rather than on a two-dimensional surface only. This allows for an increased amount of data to be acquired during the assay. The present inventive concept hence allows for a larger number of samples to be analyzed in one run without having to increase the size of the sample holder to a corresponding degree.

According to some embodiments, the rotatable body may be a cylindrical body, preferably conforming to a right circular cylinder. The cylindrical body may be configured to be rotated around a length axis of the cylinder during the assay. In alternative embodiments, the rotatable body may have a shape conforming to a disc, or at least comprise a disc shaped region, on which the matrix layer may be arranged. The disc shaped body (or region) may be configured to rotate around an axis normal to the surface on which the matrix layer is arranged.

An advantage with using a rotatable body is that the body can be rotated in a relatively constant manner, allowing for a steady state motion to be maintained without acceleration. Rotation as a means of motion is advantageous in terms of precision and allows for a relatively predictable and well-controlled trajectory of the samples during the assay. Preferably, the axis may be an axis of rotational symmetry of the sample holder. Embodiments wherein the sample holder is rotated during a part of the assay and held in a fixed position during another part of the assay are encompassed within the scope of the inventive concept.

According to an embodiment, the rotatable body may be configured to rotate such that each of the plurality of sample sites is moved through an observation volume during the assay, or at least a part of the assay including imaging of the samples. The observation volume may be defined as a volume in the matrix layer in which light from a light source and a field of view of a detector of the apparatus overlap, and from which photons are emitted or scattered during the imaging of the sample arranged in the observation volume.

The sample holder may comprise a coupling arrangement configured to be engaged with a means for generating the rotational movement. The coupling arrangement may for example operate by means of magnetic forces enabling torque transmission without mechanical contact between the sample holder and the means for generating the rotational movement. The coupling arrangement may for example be provided on an end surface of the sample holder so as to not interfere with the part of the sample holder used for holding the samples. Furthermore, the coupling arrangement may in some examples comprise a surface portion suitable for engaging a rotational bearing supporting the sample holder during rotation. The rotational bearing may for example comprise an air bearing.

The coupling arrangement may facilitate handling of the sample holder, such as transport to, from and within the apparatus. This may for example be achieved by means of a gripping arrangement, such as a robotic arm, gripping the sample holder by the coupling arrangement and transporting the sample holder to a target location. The coupling arrangement may further be configured to facilitate insertion and removal of the sample holder to/from the apparatus, or different locations within and/or outside the apparatus, and may preferably be configured to cooperate with a corresponding receiving structure at the target location. Transport of the sample holder may for example be required in case the assay is distributed over different physical locations or stations, wherein for example the imaging of the samples may be performed at one place and the reactions at another place.

Further, a plurality of sample holders may be used during an assay, or a sequence of assays, wherein a first sample holder may be replaced with a second one when the imaging of the first sample holder is finished. After imaging, the first sample holder may be transported to another station for performing reactions while the second sample holder is being imaged, and then returned to the imaging station when the imaging of the second sample holder is finished. In some examples a plurality of sample holders may be prepared in advance, or "offline", and stored in an intermediate storage while waiting for the assay to be initiated. This may increase uptime of the apparatus and reduce lead times of the assay.

The matrix layer may be understood as a material or component capable of holding or fixating the samples to the sample holder during the assay. More specifically the matrix layer may be configured to provide a plurality of sample sites in which the samples may be at least partly embedded and mechanically immobilized during the rotation of the holder. The matrix layer may thus be similar to a continuous phase in which the samples may be distributed and arranged at their respective sample sites. The term sample site may thus be referred to as the spatial location of an actual sample in the matrix layer.

According to some embodiments, the matrix layer may comprise a gel, such as a hydrogel. Examples of hydrogels include polyacrylamide (PA) gels, poly hydroxyethyl methacrylate (pHEMA) gels, and agarose gels. A gel may be understood as a cross-linked system which may exhibit little or no flow. Advantageously, the gel may be provided to the rotatable body in a liquid state and then brought into the (substantially) non-fluid state by means of a polymerization process. The polymerization process may for example be initiated by addition of a gelling agent, heating, or exposure to ultraviolet radiation. The rotatable body may be treated with a binder prior to providing the gel to facilitate sufficient adhesion to the outer surface. However, other ways of applying the gel to the rotatable body are also encompassed within the scope of the invention, e.g. a polymerized gel sheet may be affixed to the outer surface of the rotatable body by means of an adhesive. The samples may be added to the gel before or after polymerization. In case of the samples comprising DNA fragments, the fragments may be added to the gel after polymerization and be amplified within the gel.

The matrix layer may have a refractive index that is similar to that of liquid water to facilitate and simplify the transmission of light between the matrix layer and any water-based liquids that may be present at the sample holder. This may be particularly advantageous in case the matrix layer is covered by a liquid layer as discussed below. The refractive index may for example lie in the range of 1.30 to 1.35 and may for example be 1.33.

The matrix layer may be applied in more than one layer and may hence be formed of a plurality of sublayers. In an example, the samples may be provided to the holder comprising a first sublayer and then embedded or covered by a second sublayer arranged above, or outside the first sublayer. The sublayers may have a similar composition or differ from each other.

The matrix layer may be configured to allow diffusion or transport of substances, such as reagents, through the matrix layer. This may for example be achieved or promoted by means of the matrix layer being formed of a porous material and/or comprising pore structure extending through the matrix layer. The pores may have an average width of less than 50µm, such as less than 10 µm, such as less than 1 µm. Hydrogels are examples of such porous materials. In embodiments comprising polyacrylamide gels the porosity may be controlled during preparation of the gel by selecting an appropriate concentration of acrylamides in the un-polymerized gel and an appropriate ratio between acrylamide and bis-acrylamide.

Further, the matrix layer may be relatively thin so as to allow for added substances, such as the reagents, to access the samples by diffusion. The usable thickness of the layer may further be determined by the available performance of the imaging system, such as scanning depth and confocal resolution (in case of a confocal microscope). By using confocal imaging, samples distributed at different depths in the matrix layer may be imaged by using different confocal planes, and the packing density of the samples in the depth direction of the matrix layer may therefore be limited by the available confocal resolution of the imaging system. In an example, the scanning depth may for example be about 100 µm and the confocal resolution about 0.7 µm. Thus, according to some embodiments, the matrix layer may have a thickness in the range of 0.1-1000 µm, such as 1-100 µm, and such as 10-30 µm. In specific examples, the matrix layer may have a thickness of 100 µm or less, such as less than 40 µm. Further, the sample sites may be distributed in the thickness direction at an average distance of 0.7 µm or more.

Further, the thickness of the matrix layer may be determined based on the mechanical properties of the matrix layer itself, such as the maximum thickness for which a sufficient mechanical stability can be maintained during the rotation.

The diffusive properties of the matrix layer may allow for assays that include adding a reagent to the samples. The reagent may for example be comprised in a liquid, which may be provided in a liquid layer on the matrix layer. The liquid layer may for example be provided on the matrix layer as the sample holder is rotating to facilitate an even distribution of the liquid over the matrix layer. For rotatable bodies being shaped as spinning discs the liquid layer may be formed by means of spin coating. The liquid layer may further be formed by means of a shaping tool, such as a squeegee, a doctor blade, or a glass slide, which may be particularly advantageous for cylindrical sample holders. Capillary forces between the matrix layer and the shaping tool may help distributing liquid added to the sample holder over a width of the shaping tool. The liquid layer may be retained on the surface of the matrix layer by means of rotationally induced viscous shear forces. Adding the reagent in a relatively thin liquid layer has the advantage that the reagent may be relatively rapidly and efficiently dispersed within the matrix layer. Further, the reagent may be more efficiently used compared to prior art techniques such as micro fluidic flow cells, since the reagent is allowed to reach samples distributed also in the depth direction of the matrix layer. Thus, the number of samples per unit volume reagent may be increased as compared to the prior art.

According to an embodiment, a liquid dispenser may be provided for supplying a liquid and/or a reagent to the sample holder. The liquid dispenser may be configured to provide a specific or additional reactant to be present in the liquid layer at a given time and/or position on the sample holder, which allows for the chemical composition and properties of the liquid layer to be rapidly regulated.

The above aspects and embodiments may be employed for performing an assay of samples comprising DNA, such as DNA fragments. Preferably, the results from the assay may be processed to determine a DNA sequence. The DNA fragments may be amplified using Rolling Circle Amplification (RCA) to improve accuracy and decrease imaging integration time. RCA has the benefit of being iso-thermal, which may simplify the amplification process and reduce errors as the copies are made from the original DNA fragment.

The long repetitive single strands of the amplified fragments from the RCA may be referred to as concatemers or RCA products and may assume a skein-like formation as a result of their self-collapsing properties. The RCA products are particularly useful as they can be distributed both laterally and along the thickness direction of the matrix layer, thereby increasing the number of samples between 10 and 1000 times compared to a conventional sample holder where the samples are distributed on the surface only. Further, it has been observed that the RCA products tend to have a geometry that allows for them to get caught in the pores of the matrix layer, which reduces the need for binding or fixating the samples chemically.

Sequencing by synthesis (SBS) is an example of a sequencing technique that can be employed according to some embodiments. Other methods, such as hybridization and ligation methods are however conceivable as well. During SBS, amplified DNA fragments may be synthesized in parallel, base by base, using fluorescently labelled nucleotides, typically with some sort of blocking molecule, and polymerases, i.e., enzymes to catalyze the process (all collectively referred to as sequencing chemistry). Various sequencing chemistries are known, associated with various accuracy and read lengths (i.e., the number of bases possible to synthesize).

When performing parallelized assays, e.g. in next generation DNA sequencing, the chemistry and imaging steps are typically repeated many times. A single cycle may for example involve flushing of immobilized samples comprising single-stranded DNA with a solution (or reaction medium) of nucleotides equipped with blockers and fluorescent labels, a second flushing operation to remove excess nucleotides, and an imaging step to measure the fluorescence and determine which nucleotide was incorporated on the respective strand. When the information has been extracted the blockers and the fluorescents labels may be removed from the attached nucleotides and another set of reagents may be added for incorporation on the respective strand and reading of the next letter of the DNA strands. These operations or steps may be repeated over and over until the DNA sequence is established.

The above-mentioned liquid dispenser may be used to add the liquids and/or reagents to the matrix layer, which in turn may be configured to allow efficient diffusion of the liquids and/or reagents to the sample sites during the assay.

The method may hence comprise adding a reagent comprising fluorescently labelled nucleotides and polymerase to the matrix layer. The reagent may for example comprise nucleoside triphosphate containing deoxyribose, dNTP, which may bind to a first base in a DNA strand of the sample. The reagent may further comprise a blocker of a first type, preventing further dNTPs from attaching to the strand. The fluorescently labelled nucleotides may then be imaged, for example confocally. In some examples, the method may include adding four types of fluorescently labelled nucleotides with blockers, corresponding to the four letters A, C, G and T, used to represent the building blocks of DNA. Typically, one type of fluorophore is used to label each letter. The confocal imaging may thus comprise four imaging steps, one for each letter. When the information has been extracted, the blocker and the fluorescent label may be removed from the attached nucleotides and another set of reagents may be added to read the next letter of the DNA strands. As evident to the artisan several variations on this theme are conceivable. For example, the nucleotides corresponding to each respective letter may be added one by one with intermediate imaging steps. In this way the same type of fluorophore may be used to label more than one type of nucleotide. Furthermore, the blocker may be omitted in some chem istries.

The above sample holder and apparatus may equally well be used for performing an assay of other samples than DNA samples, such as proteins or RNA samples. In some embodiments, the samples may comprise tissue and/or cells distributed in the matrix layer. The samples may comprise customized genetic tags attached to particular part of a genome or to RNA strands. The tags may be amplified and read in the ways discussed above. This may provide spatial information on where in a sample a particular gene is expressed.

Further objectives of, features of, and advantages with the present invention will become apparent when studying the following detailed disclosure, the drawings, and the appended claims. Those skilled in the art realize that different features of the present invention, even if recited in different claims, can be combined in embodiments other than those described in the following.

### BRIEF DESCRIPTION OF THE DRAWINGS

This and other aspects of the present invention will now be described in more detail, with reference to the appended drawings showing embodiment(s) of the invention.
Fig. 1a-b schematically show a sample holder according to exemplifying embodiments of the present invention.
Fig. 2a-b schematically show a top view and a cross-sectional side view of a disc shaped sample holder according to exemplifying embodiments of the present invention.
Fig. 3a-b schematically show a sample holder comprising pores according to exemplifying embodiments of the present invention.
Fig. 4a-b schematically show methods according to exemplifying embodiments of the present invention.
Fig. 5 schematically shows an apparatus configured to perform an assay of a plurality of samples according to exemplifying embodiments of the present invention.

### DETAILED DESCRIPTION

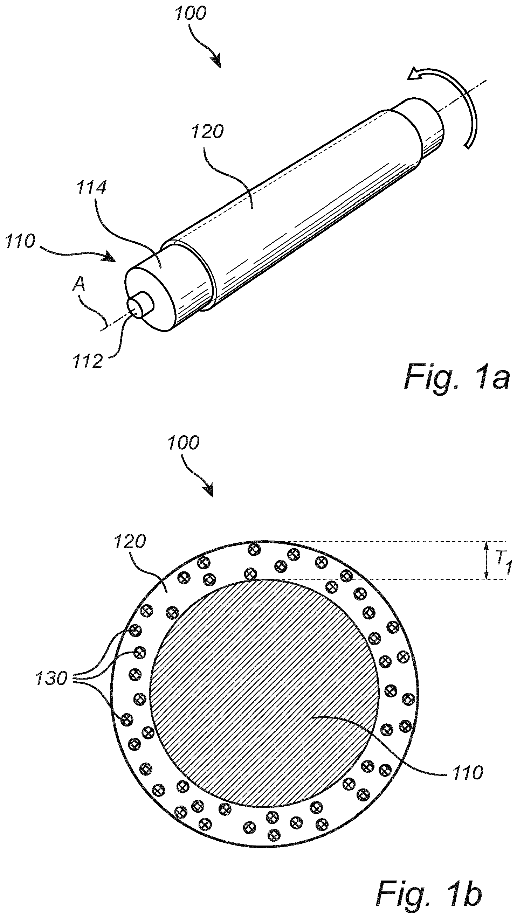

Fig. 1a-b schematically show a sample holder 100 comprising a rotatable body 110. The sample holder 100 further comprises a matrix layer 120, wherein the matrix layer 120 at least partly covers an outer surface of the rotatable body 110. The matrix layer 120 may be a hydrogel, such as polyacrylamide (PA) gel, which may be arranged on an outer surface of the rotatable body 110. Samples may be distributed/embedded in the matrix layer 120 before it is arranged on sample holder 100. This may promote integration and anchoring in the matrix layer 120. Samples may be distributed/embedded in the matrix layer 120 after it is arranged, and polymerized in the case of a hydrogel, on an outer surface of the rotatable body. The thickness, T1, of the matrix layer 120 may preferably be less than 100 µm and more preferably less than 40 µm thick. The matrix layer 120 is configured to receive samples at a plurality of sample sites 130, wherein the plurality of sample sites 130 are distributed in the matrix layer 120 in both a lateral direction and a thickness direction of the matrix layer 120. Here, the thickness direction may be defined as a radial direction from the length axis of the rotatable body 110.

In Fig. 1a-b the rotatable body 110 is exemplified as being cylindrical. The rotatable body 110 is configured to rotate around its length axis while the assay is performed at the plurality of sample sites. In other words, the rotatable body 110 is configured to be rotated around an axis in order to move samples present in the matrix layer 120 such that an assay may be performed on the samples. The sample sites 130 may be arranged anywhere in the three-dimensional volume of the matrix layer 120, e.g. it allows a plurality of samples, received by the plurality of sample sites 130, to be arranged on top of each other in the radial direction.

As indicated in Fig. 1a the rotatable body 110 may comprise a coupling arrangement 112 configured to be engaged with a means for generating the rotational movement, and/or a means for transporting the sample holder 100 (not shown). The coupling arrangement 112 may be provided on an end surface of the rotatable body 110 so as to not interfere with the matrix layer 120. The coupling may be a magnetic coupling providing contactless transmission of rotational movement and may further be configured to facilitate insertion and removal of the sample holder in/from the apparatus. Alternatively, or additionally the coupling arrangement may comprise a surface portion forming a bearing seat 114 which can be fitted with a corresponding structure in the means for generating the rotational movement. An exemplary bearing is an air bearing providing frictionless suspension during rotation.

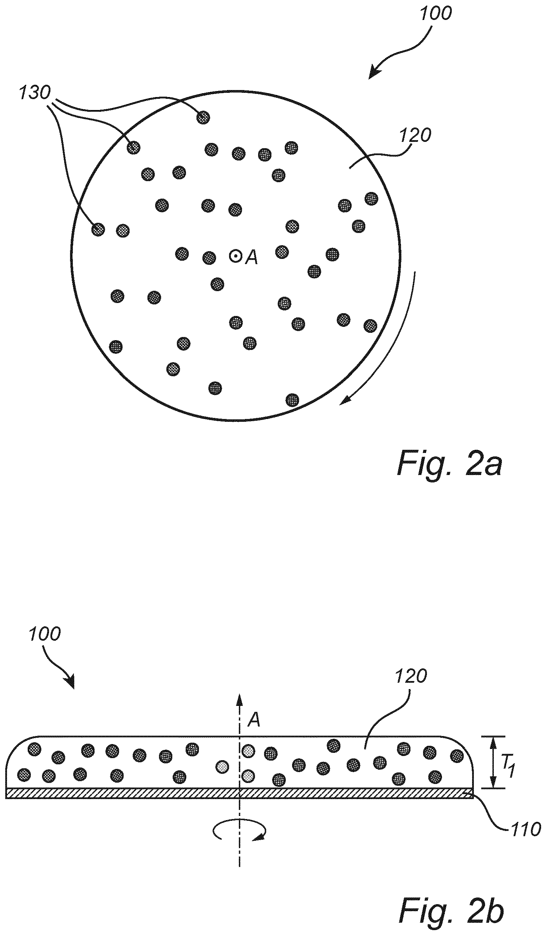

Fig. 2a-b schematically show a top view and a cross-sectional side view of a disc shaped sample holder 100. Fig. 2a-b illustrates a sample holder 100 which may be similar to the sample holder 100 in Fig. 1a-b. However, the sample holder 100 in Fig. 2a-b differs from the sample holder 100 in Fig. 1a-b in that the shape is that of a disc, instead of a cylinder. As many features of the configuration and operation of the sample holder 100 may be substantially similar to that described in Fig. 1a-b, a detailed description of features common to the embodiment illustrated in Fig. 1a-b has been omitted for the sake of brevity and conciseness.

In Fig. 2a-b the rotatable body 110 may be a substantially flat disc. The sample holder 100 is configured to be rotatable around its central axis, A. The matrix layer 120 is arranged to cover at least partly one of the outer surfaces of the rotatable body 110, wherein the outer surface lies in a plane substantially perpendicular to the axis, A. In Fig. 2a-b the thickness direction is parallel with the axis A.

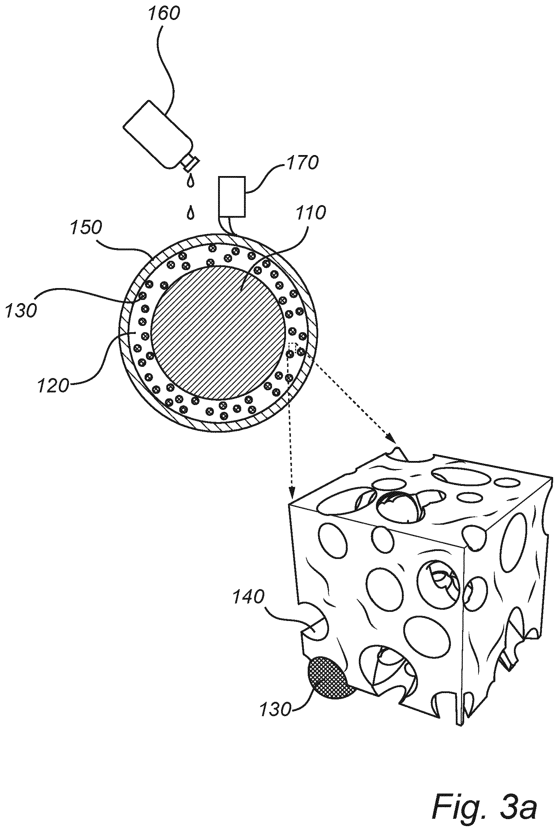

Fig. 3a-b schematically shows cross-sectional views of sample holder 100 for an apparatus 300. The sample holder 100 may be similarly configured as the embodiments of figures 1a-b and 2a-b, and may thus comprise a rotatable body 110, a matrix layer 120 and sample sites 130. The apparatus 300 is configured to perform an assay at the plurality of sample sites 130, wherein each sample site 130 is configured to receive a sample. The matrix layer 120 may be formed of a porous material, such as hydrogel, comprising pores 140 that allow diffusion of reagents to the plurality of sample sites 130. The pores 140 may be defined as channels or passages allowing e.g. a liquid carrying reagents to diffuse into the matrix layer 120, thus allowing transport of the reagents to the samples at the sample sites 130. The reagents may be configured to be attached to the samples. Furthermore, the reagents may comprise fluorophores, which are configured to emit light when illuminated. The pores 140 may in some examples have an average width of less than 1 µm. It is to be understood that the pores may take on various shapes and sizes as long as they at least partially allow diffusion of reagents to the plurality of sample sites 130.

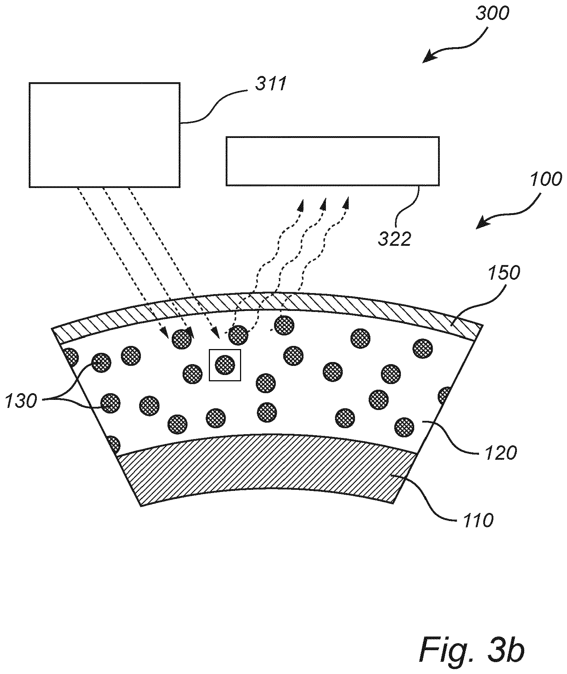

The matrix layer 120, such as the hydrogel, may be configured to allow light to reach the samples and allow light emitted by the samples to exit the hydrogel as indicated in Fig. 3b. Generally, the hydrogel may comprise a refractive index similar to that of water, i.e., in the range of e.g. 1.30-1.35, which may facilitate the transmission of light between the hydrogel layer 120 and any additional water-based liquid that may be present during the assay.

The sample holder 100 may hence be configured to receive light emitted by at least one light source 311 in order to illuminate the samples in the matrix layer 120. The at least one light source 311 may preferably be a laser diode. The samples may emit fluorescent light as a result of the incident light emitted by the at least one light source 311. The apparatus 300 may comprise a detector 322 configured to detect light emitted or scattered by the samples. The detector 322 may e.g. be able to detect fluorescent light. The at least one light source 311 and the detector 322 are configured to define an observation volume (indicated by the square in Fig. 3b) in which light from the at least one light source 311 and a field of view of the detector 322 overlap, and from which the photons may be emitted or scattered during the assay. The apparatus may further comprise an objective (not shown) arranged transmit light from the light source 311 to the observation volume and/or transmit light from the observation volume to the detector 322.

As indicated in Fig. 3a-b, a liquid layer 150 may be provided on the sample holder 100 to provide optical contact between the observation volume and the objective. Provided the matrix layer 120 is porous the liquid comprised in the liquid layer may penetrate the porous structure and enclose samples arranged within the matrix layer. Thus, reagents added to the liquid layer may flow into the matrix layer and interact with samples embedded in the matrix layer. Optionally, a cover glass may be provided between the objective and the liquid layer. An immersion oil may be provided between the cover glass and the objective to provide an optical path. It is advantageous if the matrix layer 120 is transparent to ensure optical contact between light source, observation volume, and detector, respectively. By providing the matrix layer 120 with a refractive index close to that of the liquid layer undesired refraction of light to and/or from the observation volume is prevented. For example, the liquid layer may comprise a water layer with refractive index about 1.33 and the matrix layer 120 may comprise a hydrogel with a refractive index within the range 1.3 to 1.35.

The liquid layer 150 may be provided by means of a liquid dispenser 160 and, optionally, a liquid layer shaping tool 170, such as a squeegee, a doctor blade, a cover glass, or the like. The liquid dispenser 160 may be configured to add the liquid to the matrix layer, and the liquid layer shaping tool 170 to distribute the liquid in a substantially uniform liquid layer of a desired thickness while the sample holder 100 rotates. The thickness of the liquid layer may be determined by a balance between capillary forces and a lubrication pressure between the sample holder 100 and the liquid layer shaping tool 170. A similar configuration may be provided in embodiments comprising a disc shaped rotatable body according to Fig. 2a-b.

The assay may involve microscopy imaging, such as confocal microscopy imaging or light sheet fluorescence microscopy imaging. Depending on the setup of the microscope, the assay may involve imaging hundreds or thousands of observation volumes, for example by scanning focal points of the microscope over the sample sites in order to get information about the samples. The size of an observation volume may be smaller than a sample, thus in order to get more information about a sample, the data from multiple observation volumes may have to be taken into consideration. Imaging of the samples may be performed as the rotatable body 110 rotates and thus moving the samples through the observation volume.

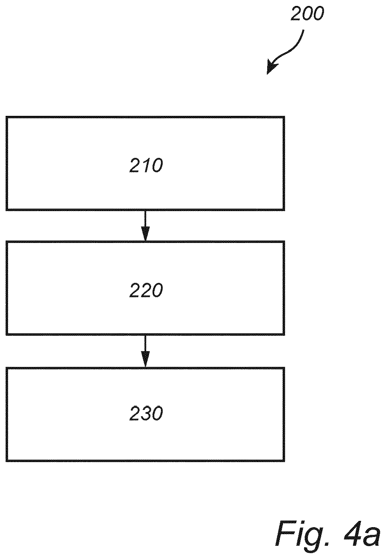

Fig. 4a schematically shows a method for performing an assay of a plurality of samples. The method 200 comprises providing 210 the plurality of samples in a matrix layer at least partly covering an outer surface of a rotatable body. The plurality of samples are distributed in the matrix layer in both a lateral direction and a thickness direction of the matrix layer. The matrix layer may comprise a gel, such as hydrogel. The plurality of samples may be distributed/embedded in the matrix layer before the matrix layer is arranged/applied on an outer surface of the rotatable body. Hence, the plurality of samples may be added to a gel mixture before polymerization of the gel, to promote integration and anchoring on the gel structure. Furthermore, the plurality of samples may be added to the matrix layer after it is arranged on an outer surface of the rotatable body. For example, when the plurality of samples comprises DNA fragments and the matrix layer comprise hydrogel, the plurality of samples may be added to the matrix layer after polymerization of the gel on an outer surface of the rotatable body. The method 200 further comprises rotating 220 the rotatable body around an axis. The method 200 further comprises performing 230 the assay of the plurality of samples while rotating the rotatable body. The assay may comprise confocal microscopy imaging. The confocal microscopy imaging may be applied for imaging the plurality of samples and retrieve DNA sequence information. Alternatives to confocal microscopy imaging system are two-photon excitation imaging system, wide-field imaging system, multiphoton imaging system, and light sheet imaging system. The step of performing 230 the assay may comprise adding reagents to the plurality of samples, wherein a reagent may comprise a fluorophore. For example, fluorophores that may be comprised in fluorescently labelled nucleotides, which are configured to bind to the plurality of samples and be imaged using confocal microscopy imaging. The method 200 may comprise having four types of fluorophores, for labelling a respective one of the four letters A (Adenine), C (Cytosine), G (Guanine) and T (Thymidine), used to represent the building blocks, nucleotides, of DNA. Typically, different types of fluorophores are used to label different letters. The confocal imaging may thus comprise taking four images, one for each letter. When the information for one letter/nucleobase has been extracted, the fluorophore related to that base may be removed and another set of reagents may be added to synthesize and read the next base of the DNA strands.

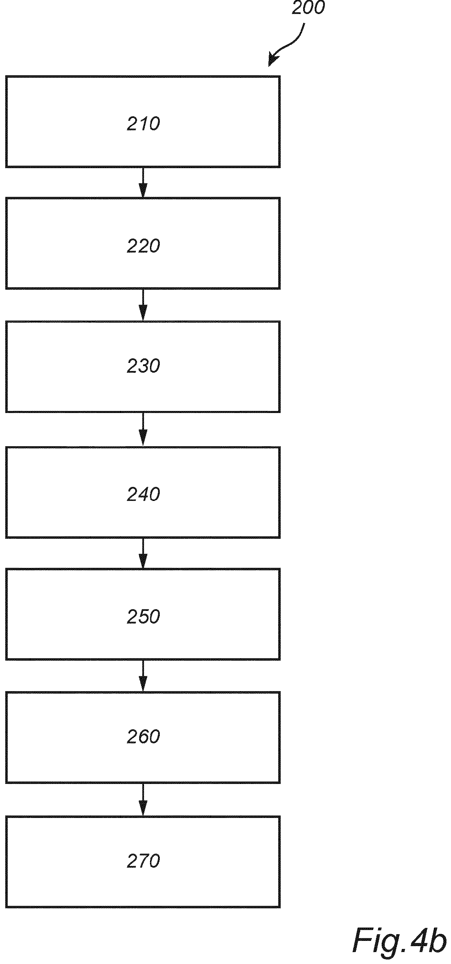

Fig. 4b shows a method comprising the steps 210, 220 and 230 as described in Fig. 4a. In Fig. 4b, the method 200 may further comprise providing 240 a liquid layer, comprising the reagent, on the matrix layer. Providing 240 the liquid layer, may be done by a liquid dispenser. By providing 240 a liquid layer, adding reagents to the plurality of samples may be facilitated. The providing 240 of a liquid layer may allow reagents to be more uniformly distributed to the plurality of samples. This may be especially true if the rotatable body is rotating when the liquid layer is provided 240.

The plurality of samples may comprise DNA fragments. The plurality of samples may comprise DNA concatemers. The method 200 may further comprise performing 250 amplification of DNA present in the plurality of samples. Examples of DNA amplification include rolling circle amplification, RCA, Wildfire amplification, and bridge amplification. In general, amplification is either done before distributing/embedding the plurality of samples in the matrix layer or after. The plurality of samples may comprise at least one DNA strand, and the method 200 may further comprise attaching 260 a dNTP to the DNA strand. The dNTP is a nucleoside triphosphate containing deoxyribose. The dNTP may comprise a blocker preventing further dNTPs from attaching to the DNA strand. The method 200 may further comprise providing 270 DNA sequence information of the plurality of samples.

It is to be understood that the method 200 may comprise any combination of the steps 240, 250, 260 and 270. In other words, the method 200 may e.g. include the step of providing 240 a liquid layer, but not steps 250, 260 and 270.

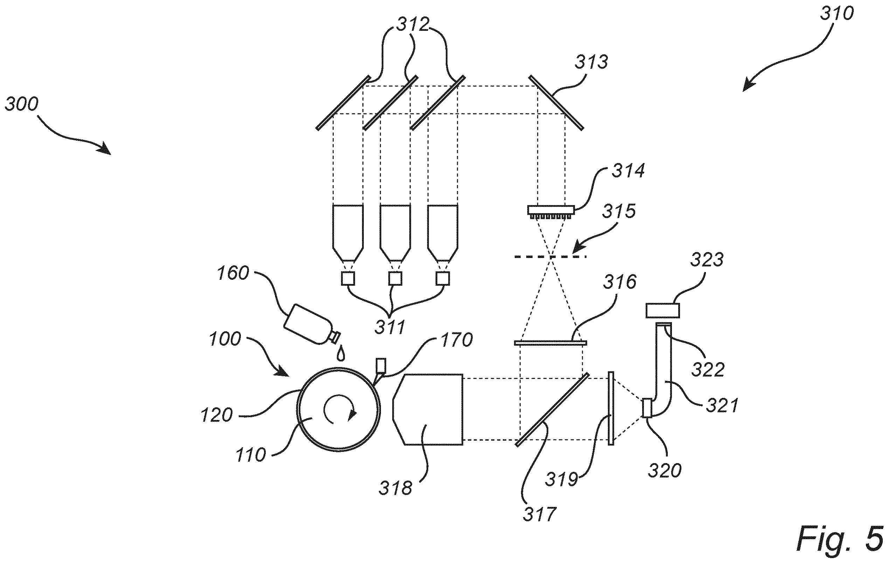

Fig. 5 schematically shows an apparatus 300 configured to perform an assay of a plurality of samples. The apparatus 300 comprises a sample holder 100 configured to receive a plurality of samples, similar to the sample holder 100 in Fig. 1a-b, 2a-b and 3a-b. As many features of the configuration and operation of the sample holder 100 is substantially similar to that described in Fig. 1a-b, 2a-b and 3a-b, a detailed description of features common to the embodiment illustrated in Fig. 1a-b, 2a-b and 3a-b has been omitted for the sake of brevity and conciseness. The apparatus 300 further comprises a confocal microscope 310 configured to illuminate the plurality of samples and to detect photons emitted or scattered from the plurality of samples. The rotatable body 110 is configured to be arranged in the apparatus 300 and to be rotated by the apparatus 300 while the confocal microscope 310 detects the light/photons originating from the plurality of samples. The rotatable body 110 may rotate around an axis such that photons originating from samples arranged in the matrix layer 120 at a certain distance from the outer surface of the rotational body 110 may be detected during one revolution of the rotatable body 110.

In Fig. 5, the confocal microscope 310 comprises at least one light source 311, configured to illuminate the plurality of samples. The at least one light source 311 may be a plurality of laser diodes configured to emit collimated light beams, wherein multiple light beams originating from a plurality of light sources 311 may be united into the same optical path via dichroic beam splitters 312. It is also conceivable that the different light beams are directed into the same optical path using mirrors to deflect the beams at different angles. The light beams may thereafter be made incident, optionally via a mirror 313, on a micro lens array 314, generating an array of foci in the focal plane 315 on the other side of the micro lens array 314. A tube lens 316 may be placed with its focal plane coinciding with the focal plane of the micro lens array 314. The tube lens 316 thus generates a corresponding array of collimated beams. This array of collimated beams may then be reflected against a 45-degree angled beam splitter 317 and may subsequently be incident on an objective lens 318. In other embodiments the collimated beams may be reflected against a semi-transparent mirror. The objective lens 318 is preferably placed such that the aperture of the said objective lens 318 is placed at the focal plane of the tube lens 316. In this way the maximum light falls within the aperture of the objective lens 318. The passage of the light through the objective lens 318 generates an array of foci that defines the observation volumes in the volume where the rotating samples, fixated in the matrix layer 120, under investigation passes by.

Scattered and/or fluorescent light from the observation volumes in the illuminated samples, arranged on the sample holder 110, is then collected by the objective lens 318 and made to be collimated and pass through beam splitter 317. A second tube lens 319 may then generate an image of the observation volumes on an array of pinholes 320 (or optionally optical fibers), spatially filtering the light before the light from each observation volume, via a fiber bundle 321, is made incident on a detector 322. The detector 322 is preferably an array of avalanche photo diodes run in Geiger mode. The signals from the detector 322 are processed in a signal processing unit 323. The laser diodes used for generating the illumination light can either be run in continuous wave mode or in pulsed mode depending on the application. If the illumination light is used to excite fluorophores, pulsed light is sometimes advantageous. To ensure that only the light emitted by the fluorophores is detected, a suitable filter (not shown) may be introduced in the beam path somewhere between the beam splitter 317 and the array of pinholes (or optical fibers) 320. Preferably the filter is placed between the beam splitter 317 and the second tube lens 319.

The confocal imaging of the plurality of samples is typically performed while the sample holder is rotating. Furthermore, the apparatus 300 may comprise a liquid dispenser 160 and a liquid layer shaping tool 170 in order to facilitate the addition of reagents to the plurality of samples.

It is to be understood that the specific components and the exact setup of the apparatus 300 and the confocal microscope 310 disclosed herein are exemplary only. For example, the apparatus 300 may very well only use one light source 311, or multiple light sources 311 emitting light with different properties, such as different wavelengths. Furthermore, the number, and use, of mirrors, beam splitters, apertures and pin holes may vary as long as confocal imaging of the samples in the matrix layer 120 may be performed.

Additionally, variations to the disclosed examples can be understood and effected by the skilled person in practicing the claimed invention, from a study of the drawings, the disclosure, and the appended claims. The mere fact that certain measures are recited in mutually different dependent claims does not indicate that a combination of these measures cannot be used to advantage.

A feature described in relation to one aspect may also be incorporated in other aspects, and the advantage of the feature is applicable to all aspects in which it is incorporated. Other objectives, features, and advantages of the present inventive concept will appear from the detailed disclosure, from the attached claims as well as from the drawings.

Generally, all terms used in the claims are to be interpreted according to their ordinary meaning in the technical field, unless explicitly defined otherwise herein. Further, the use of terms "first", "second", and "third", and the like, herein do not denote any order, quantity, or importance, but rather are used to distinguish one element from another. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

## Claims

1. A sample holder (100) for an apparatus (300) configured to perform an assay at a plurality of sample sites (130), wherein each sample site is configured to receive a sample, the sample holder comprising:
a rotatable body (110); and
a matrix layer (120) at least partly covering an outer surface of the rotatable body;
wherein the plurality of samples sites are distributed in the matrix layer in both a lateral direction and a thickness direction of the matrix layer; and
wherein the rotatable body is configured to be arranged in the apparatus and to be rotatable around an axis (A) while the assay is performed at the plurality of sample sites.

2. The sample holder according to claim 1, wherein the rotatable body is a cylindrical body and the outer surface is a lateral surface of said cylindrical body.

3. The sample holder according to claim 1 or 2, wherein the matrix layer comprises a gel, such as a hydrogel.

4. The sample holder according to any of the preceding claims, wherein the matrix layer comprises a refractive index in a range from 1.30 to 1.35.

5. The sample holder according to any of the preceding claims, wherein the matrix layer is less than 100 µm thick, such as less than 40 µm thick.

6. The sample holder according to any one of the preceding claims, wherein the matrix layer comprises pores (140), and wherein the pores have an average width of less than 1 µm.

7. A method (200) for performing an assay of a plurality of samples, comprising:
providing (210) the plurality of samples in a matrix layer at least partly covering an outer surface of a rotatable body, wherein the plurality of samples are distributed in the matrix layer in both a lateral direction and a thickness direction of the matrix layer;
rotating (220) the rotatable body around an axis; and
performing (230) at least a part of the assay of the plurality of samples while rotating the sample holder.

8. The method according to claim 7, wherein the method further comprises providing (240) a liquid layer on the matrix layer, and wherein performing the assay comprises adding (260) a reagent to the liquid layer.

9. The method according to claim 8, wherein the reagent comprises a fluorophore.

10. The method according to any of claims 7 to 9, wherein the plurality of samples comprises DNA fragments.

11. The method according to any one of claims 7 to 10, wherein the plurality of samples comprises DNA concatemers produced by rolling circle amplification, RCA.

12. The method according to any one of claims 7 to 11, wherein the sample comprises at least one DNA strand, and wherein the method further comprises attaching a nucleoside triphosphate containing deoxyribose, dNTP, to the DNA strand, and wherein the dNTP comprises a fluorescent label.

13. The method according to any one of claims 7 to 12, wherein the assay further comprises confocal microscopy imaging.

14. An apparatus (300) configured to perform an assay of a plurality of samples, comprising:
a sample holder (100) configured to receive said plurality of samples at a plurality of sample sites (130); and
a microscope (310) configured to illuminate the plurality of samples sites and to detect photons emitted or scattered from the plurality of sample sites;
wherein the sample holder comprises:
a rotatable body (110); and
a matrix layer (120) at least partly covering an outer surface of the rotatable body;
wherein the matrix layer comprises the plurality of sample sites such that they are distributed in the matrix layer in both a lateral direction and a thickness direction of the matrix layer; and
wherein the sample holder is configured to be arranged in the apparatus and to be rotated by the apparatus while the microscope detects the photons emitted or scattered from the plurality of sample sites.

15. The apparatus according to claim 14, further comprising a liquid dispenser (160) arranged to provide a liquid comprising a reagent to the sample holder.
